# EUROPEAN PATENT SPECIFICATION

(11) **EP 3 232 361 B1**
(45) Date of publication and mention of the grant of the patent: **16.10.2019**
(21) Application number: 17153795.4
(22) Date of filing: 30.01.2017
(51) Int. Cl.: G06F 21/56, G06F 21/62

(54) **A METHOD, COMPUTER PROGRAM AND FILTER FOR PROTECTING A COMPUTER DEVICE AGAINST MALICIOUS RDF CONTENT IN LINKED DATA**
EINE METHODE, EIN COMPUTERPROGRAMM UND EIN FILTER ZUM SCHUTZ EINES COMPUTERS GEGEN BÖSARTIGEN RDF INHAHLT IN VERBUNDENEN DATEN
UNE MÉTHODE, UN PROGRAMME INFORMATIQUE ET UN FILTRE POUR PROTÉGER UN ORDINATEUR CONTRE LE CONTENU MALVEILLANT D'UN RDF DANS LE WEB DES DONNÉES

(30) Priority: 15.04.2016 GB 201606605; 15.04.2016 DE 102016206436
(43) Date of publication of application: 18.10.2017
(73) Proprietor: FUJITSU LIMITED, Kawasaki-shi Kanagawa 211-8588 (JP)
(72) Inventor: MUÑOZ JIMÉNEZ, Emir Fernando, Galway (IE); AL DARRA, Suad, Galway (IE); COSTABELLO, Luca, Galway (IE)
(74) Representative: Haseltine Lake Kempner LLP

(56) References cited:
- US-A1- 2012 173 493
- Caruana Godwin: "MapReduce based RDF Assisted Distributed SVM for High Throughput Spam Filtering", , 10 July 2013 (2013-07-10), pages 1-176, XP055351301, Retrieved from the Internet: URL:http://bura.brunel.ac.uk/bitstream/243 8/7572/1/FulltextThesis.pdf [retrieved on 2013-07-10]
- SEONGWOOK YOUN ET AL: "Spam decisions on gray e-mail using personalized ontologies", APPLIED COMPUTING, ACM, 2 PENN PLAZA, SUITE 701 NEW YORK NY 10121-0701 USA, 8 March 2009 (2009-03-08), pages 1262-1266, XP058183380, DOI: 10.1145/1529282.1529565 ISBN: 978-1-60558-166-8

## Description

The present invention relates to a method, computer program and filter for protecting a computer device against malicious RDF content in Linked Data.

Linked Data is a data publishing paradigm for sharing machine-readable data on the World Wide Web ("the Web") as interlinked datasets. Linked Data uses web and semantic web technologies such as HTTP (Hypertext Transfer Protocol), RDF (Resource Description Framework, a standard model for data interchange on the Web) , RDFS/OWL (RDF Schema and Web Ontology Language - syntaxes used to annotate RDF data with semantic metadata), and SPARQL (SPARQL Protocol and RDF Query Language, a standard query language and data access protocol for the RDF data model).

A triple is an instance of a statement according to the RDF model. It consists of three components: a subject, which is typically a URI (a Uniform Resource Identifier), a predicate (which is a URI), and an object, typically a URI or a literal value (e.g. a string, a number, a date, etc.).

Data providers have so far published hundreds of Linked Datasets and billions of Triples on the Web, thus contributing to the birth of the so-called "Web of Data". Linked Datasets (created by companies, governments, and public sector bodies) contain rich information about different domains of knowledge. They are published using RDF so as to be easily interchanged by agents and applications, as Linked Data providers publish data in different ways and formats. Roughly, these can be divided into two methods: a) *on-line* methods and b) *off-line* methods. On-line methods usually include a SPARQL endpoint (database) accepting HTTP requests containing SPARQL queries, whilst off-line methods usually include RDF serializations in static files using formats like RDF/XML, N-Triples, or Turtle. However, it has been shown that the process of publishing and consuming Linked Data is prone to electronic spam (i.e. irrelevant or unsolicited messages sent over the Internet, typically to large number of users, for example for the purposes of advertising, phishing, and spreading malware, including messages where the recipient has not verifiably granted deliberate, explicit, and still-revocable permission for it to be sent; non-spam is known as "ham"). Although in its infancy, spam on the Web of Data might play an important role in preventing a widespread adoption of Linked Data. For example, as Linked Data becomes more popular in enterprise applications (e.g. Schema.org, GoodRelations, the Open Graph Protocol), issuers of spam ("spammers") might see it as an opportunity to gain economic advantages, or simply to have fun, as has already happened in other domains (e.g., emails, web pages, social networking, SMS). Nevertheless, Linked Data researchers and practitioners have so far overlooked such adversary behaviour. This means that there exists no specific countermeasure to prevent spam on the Web of Data.

Linked Data spam affects both data publishers (an individual, institution, or company that publishes data on the web, whether this is open, paywall-protected, or access-restricted) and data consumers (the person, software or process that uses data available on the Web). Publishers must offer data with an acceptable level of quality, e.g. for the sake of law compliance, community reputation, service layer agreements with customers, etc. Also, hosting undesired spam triples is an obvious waste of resources. On the other hand, consumers retrieve spam triples without any protection, and spammers might reach end users by polluting the user interfaces (UIs) of Linked Data clients (i.e. a Web client that supports HTTP content negotiation for the retrieval of Linked Data from URLs and/or SPARQL points). Moreover, there is also the possibility that machine-to-machine Linked Data processing could also be contaminated.

Spam filters (also called anti-spam) comprise software, hardware or processes that are used to combat the proliferation of spam or to keep spam from entering a system. RDF triples classified as spam by such a filter are quarantined, i.e. stored in an isolated repository or "quarantine".

US2012/0173493A1 discloses a method for providing a mechanism for safeguarding against malicious ontologies which includes causing examination of a received file associated with an ontology to determine a namespace marking for subjects, predicates and objects of each triple of the file that are to be stored in a database, utilizing relationship data corresponding to the namespace marking to identify triples whose subjects or objects do not correspond to the ontology, and determining whether the relationship data enables the triples whose subjects or objects do not correspond to the ontology to be considered as a valid data set for storage in the database.

Spam in Linked Data inherits challenges from classic spam domains such as emails (e.g. spam delivered as polluted text), but it also has specificities (e.g. pollution of RDFS/OWL vocabularies, exploitation of inference and reasoning, etc.). Although different types of Linked Data-specific spam threats are known - e.g. content-based, link-based and protocol-based - no countermeasures have yet been proposed, and no spam filter for Linked Data exists.

### Example 1. In the following we show two examples of spam attacks that may affect Linked Data:

- *A well-known company is assigned a malicious label:*

   ```
 example:Fujitsu rdfs:label "Buy Cheap Replica Watches" .
```
- *Attacks may attribute false authorship to a person:*

   ```
 example:statement a bibo:Quote.
 example:statement bibo:content "I buy REPLICA WATCHES on replicaking.com".
 example:statement dc:creator <http://www.w3.org/People/Berners-Lee>.
```

As spam attacks in Linked Data (e.g. *Example 1*) may come in different guises and use different strategies, it is desirable that measures put in place to protect against such attacks should take input RDF triples and process them according to the kind of threat they represent, regardless of the data access method adopted by consumers (i.e. SPARQL or HTTP operations). Unforeseen threats might also arise, hence the filtering mechanism should preferably be extensible.

Conventional binary classifiers trained to detect malicious string literals (or malicious URIs) can filter single-triple spam threats. However, a number of Linked Data spam threats span multiple RDF statements. These malicious RDF triples, hereafter referred to as multi-statements spam threats, might include deceptive, harmless-looking RDF statements that conventional binary classifiers cannot label as spam, thus falling short of detecting the correct type of spam threat. Thus, it is also desirable to identify multi-statements spam threats correctly.

*Consider Example 1: The first example shows* a *single-triple spam threat that can be filtered out by a conventional binary classifier trained to detect malicious string literals. On the other hand, in the second example a triple-by-triple conventional classifier only labels as spam the triple at line 2. Such a conventional approach fails to label as spam triples at lines 1 and 3 (indeed, such triples do not look malicious at first sight). As a consequence, it does not detect that the spam threat in the second example is about false authorship attribution.*

According to a first aspect of the present invention there is provided a method of protecting a computer device running a Linked Data client application from malicious Resource Description Framework - RDF - content in data retrieved by the Linked Data application, by screening RDF triples in data retrieved by the Linked Data client application (for example, from the World Wide Web or local files) for malicious RDF content before the RDF triples are further processed by the Linked Data client application, wherein the screening comprises: storing RDF triples from the retrieved data in a cache; employing a SPARQL Protocol and RDF Query Language - SPARQL - engine equipped with a list of SPARQL queries relating to at least one content-based Linked Data spam threat to analyse each of the RDF triples stored in the cache and identify those of the triples which contain RDF content deemed to be malicious, wherein analysing each of the RDF triples comprises using at least one SPARQL FILTER function comprising a first filter which labels RDF string literals as spam or ham and a second filter which labels Uniform Resource Identifiers - URIs - as spam or ham, the first and second filters comprising respective first and second binary classifiers, the first classifier having been trained to identify malicious RDF string literals and the second classifier having been trained to identify malicious URIs; removing from the cache any triples which have been identified as containing malicious RDF content; and allowing triples remaining in the cache to be further processed by the Linked Data client application.

A method embodying the first aspect of the present invention preferably further comprises quarantining triples which have been identified as containing malicious RDF content.

The SPARQL queries preferably comprise determining whether a graph pattern in an RDF triple matches a stored graph pattern for malicious RDF content. At least in the context of the present application, a sequence of RDF triple patterns, with optional filters, is defined as a single basic graph pattern. Graph patterns are the basis for the SPARQL query language. A SPARQL query can specify variables and conditions that one or more values satisfy; sets of such elements are called graph patterns. SPARQL graph pattern matching is defined in terms of combining the results from matching basic graph patterns. For example, the following graph pattern:

```
 ?var rdfs:label "Fujitsu Ltd."
```

includes the ?var variable that might match against the RDF entity : Fujitsu (see also Example 2).

According to an embodiment of a second aspect of the present invention there is provided a computer program which, when run on a computer, causes that computer to carry out a method embodying the first aspect of the present invention.

According to an embodiment of a third aspect of the present invention there is provided a filter configured to protect a computer device running a Linked Data client application from malicious Resource Description Framework - RDF - content in data retrieved by the Linked Data application, which filter is operable to screen RDF triples in data retrieved by the Linked Data client application (for example, from the World Wide Web or local files) for malicious RDF content before the Linked Data is further processed by the Linked Data client application, wherein the filter comprises: a cache configured to store RDF triples from the retrieved Linked Data; a Simple Protocol and RDF Query Language - SPARQL - engine equipped with a list of SPARQL queries relating to at least one known content-based Linked Data threat, which engine is configured to analyse each of the RDF triples stored in the cache and identify those of the triples which contain RDF content deemed to be malicious; at least one SPARQL FILTER function for use by the SPARQL engine in analysing each of the RDF triples, which SPARQL filter function comprises a first filter which labels RDF string literals as spam or ham and a second filter which labels Uniform Resource Identifiers - URIs - as spam or ham, wherein the first and second filters comprise respective first and second binary classifiers, the first classifier having been trained to identify malicious RDF string literals and the second classifier having been trained to identify malicious URIs; and a subtractor configured to remove from the cache any triples which have been identified as containing malicious RDF content before the triples in the cache are further processed by the Linked Data client application.

A filter embodying the present invention may further comprise an isolated repository for storing copies of triples, which have been identified as containing malicious RDF content, in quarantine.

The SPARQL queries preferably comprises determining whether a graph pattern in an RDF triple matches a stored graph pattern for malicious RDF content.

An embodiment of the present invention can provide SPARQL-based spam screening for content-based threats, i.e. threats based on malicious RDF content, for Linked Data client applications. The screening can identify a plurality of known Linked Data spam threats, and can be further extended to protect against unforeseen attacks, regardless of the data access method adopted by Linked Data clients (i.e. SPARQL or HTTP operations).

A filter embodying the present invention can detect complex Linked Data spam threats owing to the interplay of deterministic graph pattern matching (to detect spam-prone RDF subgraphs, that is a subset of the RDF triples included in the whole RDF graph) and supervised learning (to identify malicious literals and URIs within a triple). Thus, deceptive, harmless-looking triples included in multi-statements spam threats can be identified.

The present invention is designed to work with Linked Data only, i.e. with RDF, URIs, HTTP, and SPARQL. The output methodology and artefacts are not designed to solve the spam problem in general (e.g. emails, web pages, social networking, SMS).

A filter embodying the present invention can be plugged into any Linked Data client application, as it is compatible with any data access strategy for Linked Data (i.e. it supports HTTP operations on triples and SPARQL queries).

Reference will now be made, by way of example, to the accompanying drawings, in which:
Figure 1 shows a diagram of a Linked Data server/client configuration in which an embodiment of the present invention may be employed;
Figure 2 shows a diagram of apparatus embodying the present invention according to a first embodiment;
Figure 3 is a flowchart of a method embodying the present invention for use with the apparatus of Figure 2;
Figure 4 shows a diagram of apparatus embodying the present invention according to a second embodiment;
Figure 5 illustrates a prior art procedure for training binary classifiers;
Figure 6 is a flowchart for explaining the operation of part of the apparatus of Figure 2;
Figure 7 is a flowchart for explaining the operation of another part of the apparatus of Figure 2;
Figure 8 is a flowchart for explaining the operation of a further part of the apparatus of Figure 2;
Figure 9 shows a diagram of apparatus embodying the present invention according to a third embodiment; and
Figure 10 is a block diagram of a computing device suitable for carrying out a method embodying the present invention.

The present invention is intended to protect only against content-based spam threats, in particular content-based threats defined as spam vectors that are entirely based on malicious RDF content, rather than threats based on HTTP protocol abuses or low-severity threats such as presentation knowledge pollution and Data URI embedding.

In the present application a qualitative definition of threat severity is provided: threats are labelled as *low*, *medium*, or *high* severity according to a qualitative estimation of the potential damage caused by each threat. Severity is determined by different factors, for example whether spam is directly delivered to end users, how frequently the threat can affect end users, which kind of Linked Data applications and application layers it affects, etc.

Table 1 below includes a list of known single-triple content-based Linked Data spam threats. These threats can be detected by ad-hoc heuristics based on conventional binary classifiers from prior art. Table 2 shows known content-based threats that span multiple RDF triples. As explained above, these threats include harmless-looking RDF statements that conventional binary classifiers cannot label as spam. An embodiment of the present invention can detect all the threats presented in Tables 1 and 2 (i.e. all content-based Linked Data threats known to date). Note that additional threats might be discovered in the future, hence the lists in Tables 1 and 2 are by no means complete and serve only as example. As described below, the proposed spam filter may be extensible and support additional threats.

**Table 1: Known content-based Linked Data single-triple spam threats**

| **Threat** | **Definition & Example** | **Severity** |
|---|---|---|
| **False labelling** | | **High** |
| | Assigns a malicious label to an entity. | Linked Data applications UIs use the rdfs:label property to display labels. This will lead to presenting spam directly to end users. |
| | :Fujitsu rdfs:label "BUY CHEAP VIAGRA"@en . | |
| **Identity assumption** | Assigns a misleading link to a legitimate entity, thus leading to untrusted web sources. | **High** |
| | :Fujitsu owl:sameAs <http://85.2.5.6/cheap-viagra>. | This threat can be harmful for applications that heavily rely on entity disambiguation. |

**Table 2: Known content-based Linked Data multiple-triple spam threats**

| **Threat** | **Definition & Example** | **Severity** |
|---|---|---|
| **Misattribution** | Uses the dc:creator property to assign spam to unaware entities (e.g. people, organizations, companies). | **Medium** |
| | : statement a bibo:Quote ; | This threat tricks users using or looking for trusted entities. |
| | bibo:content "I buy REPLICA WATCHES"; | |
| | dc:creator <http://www.w3.org/People/Berners-Lee>. | |
| **Malicious sub classing** | Associates harmless RDFS/OWL classes to malicious classes. | **Medium** |
| | gm:REPLICABuyer a owl:Class ; | This threat targets Linked Data applications that use reasoning services. |
| | foaf:homepage <http://replica_master.com/>; | |
| | rdfs:label "A class for REPLICA customers". | |
| | foaf:Person rdfs:subClassOf gm:REPLICABuyer. | |
| **Inverse-functional property cloning** | Spammers can use inverse-functional properties to associate spam to harmless entities. | **Medium** |
| | ex:person_id3423 a foaf:Person; | This threat targets Linked Data applications that use reasoning services. Also dangerous for applications that heavily rely on entity disambiguation. |
| | foaf:homepage <http://www.w3.org/People/Berners-Lee>; | |
| | foaf:name "Buy REPLICA WATCHES at replica_king.com". | |

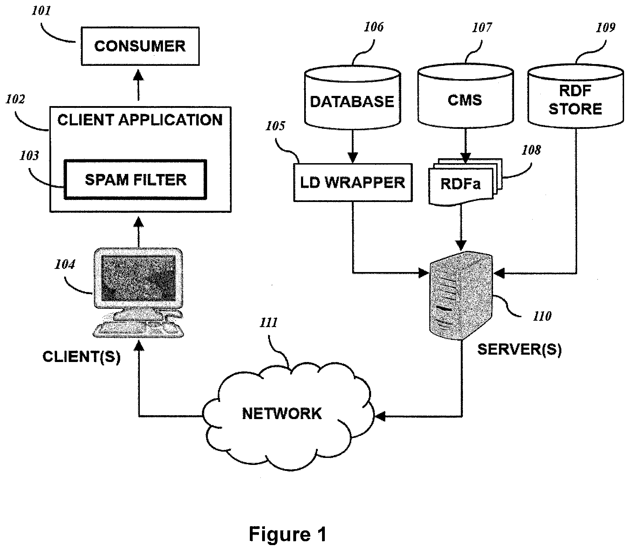

The block diagram in Figure 1 shows a Linked Data server/client configuration. Linked Data consumers 101 (humans, software, or processes that use Linked Data published on the Web) access Linked Data via one or more Linked Data clients 104, which may be any machine running a Linked Data client application 102. The Linked Data client application 102 includes a spam filter 103 embodying the present invention. The Linked Data clients 104 exchange data with one or more servers 110 (any machine hosting data sources 105 to108 on the Web as Linked Data) via a computer network 111. The data sources 105 to 108 may be any kind of data source that can be published on the web as triples by Linked Data Publishers, and are not necessarily restricted to those shown in Figure 1.

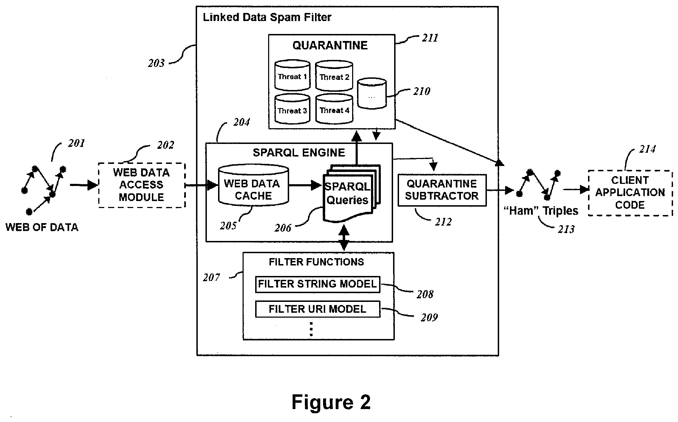

Figure 2 shows the architecture of a Linked Data spam filter 203 embodying the present invention. In this embodiment the filter 203 is designed to be included in a Linked Data client application, such as 102 shown in Figure 1 (note that the dotted blocks in Figure 2 refer to other components of a Linked Data client application), but in other embodiments the Linked Data spam filter may be provided separately from the Linked Data client application.

The Linked Data spam filter 203 is configured to receive as input, via a web data access module 202 (which may be any kind of client-side access strategy for Linked Data (HTTP or SPARQL client)), the RDF content (hereafter the "web of data" or the "input") 201 that will be analysed by the spam filter. It consists of any kind of RDF repository (e.g. RDF files, triplestores, Linked Data APIs).

The Linked Data spam filter 203 comprises a SPARQL engine 204, which may be any off-the-shelf SPARQL 1.1 engine.

The SPARQL engine 204 comprises a web data cache 205 into which triples from the web of data 201 are cached by the web data access module 202. The web data cache 205 can be any type of triple repository (i.e. an RDF file, an in-memory triplestore, a persisted triplestore, etc.). The SPARQL engine 204 is provided with an extensible list of SPARQL queries 206, comprising SPARQL FILTER statements, each aimed at filtering spam triples for a given spam threat. The SPARQL engine 204 processes input triples from the web data cache 205. Each SPARQL query 206 matches malicious triples according to a specific spam threat, and copies such triples to a quarantine 211 of the Linked Data spam filter 203.

The quarantine 211 comprises in this embodiment an extensible set of threat-specific data stores 210 where "suspicious" triples are temporarily stored. The quarantine is organised as a set of threat-specific data stores to i) keep track of the type of threat suffered by suspicious triples, and ii) preserve the original named graphs seen in the input data 201. Quarantined content can be reviewed by end users for additional validation and false positives removal. The threat-specific stores 210 can be any type of triple repository (e.g. RDF files, in-memory stores or persisted triplestores). Each threat-specific store 210 holds copies of suspicious triples associated to a specific spam threat. Note that the copy operation (performed by the SPARQL queries in 206) preserves the original named graphs.

The SPARQL queries 206 make use of custom SPARQL FILTER functions 207 to detect malicious content in triples. The filter comprises an extensible list of such functions. This list includes two functions by default, that is a string spam filter 208, which is a binary classifier that labels RDF string literals as spam or ham, and a URI Spam filter 209, which is a binary classifier that labels URIs as spam or ham. The filters 208 and 209 adopt algorithms from statistical machine learning, and hence may detect false positives or true positives. These filters are discussed in more detail below.

The Linked Data spam filter 203 further comprises a quarantine subtractor 212. The SPARQL engine outputs the content of the quarantine to the quarantine subtractor 212, and the quarantine subtractor 212 creates "ham" triples 213, i.e. RDF triples not marked as spam by the spam filters 208, 209, by removing quarantined triples from the web data cache 205. The ham triples 213 are output to client application code 214 (i.e. the Linked Data client application business logic).

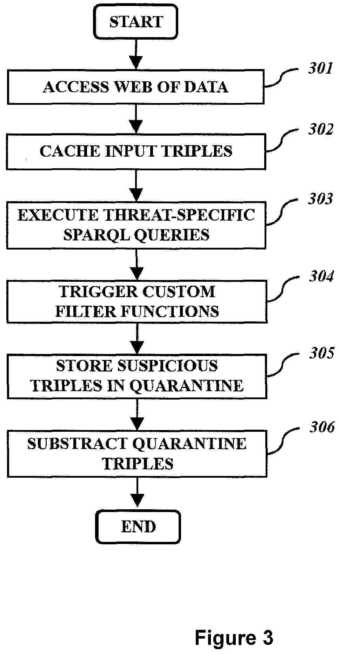

The flowchart in Figure 3 describes how the components shown in Figure 2 interact. In step 301 a client application accesses Linked Data on the web (i.e. the Web of Data 201) with HTTP operations and/or SPARQL queries via the web data access module 202. In step 302 input triples are cached in the web data cache 205. In step 303 threat-specific SPARQL queries 206 are executed over the input data in the web data cache 205. Portions of the SPARQL queries 206 might also be executed over data in the quarantine 211, to check whether known harmful patterns occurred in input data 201. In step 304 the SPARQL queries 206 trigger the execution of some or all of the custom FILTER functions 207 (e.g. the string spam filter 208 or the URI spam filter 209). In step 305 solutions of SPARQL queries 206 executed in steps 303 and 304 which are considered harmful triples are stored in the quarantine **211**. Harmful triples are stored in the specific store 210 associated with the detected threat. Named graphs are preserved. In step 306 the quarantine subtractor 212 removes quarantined triples from input data, i.e. from triples stored in the web data cache 205. This step creates "ham triples" that can be safely consumed by the Linked Data client application code 214. Note that the client application code 214 may also access the quarantine 211, so that end users can manually revise false positives.

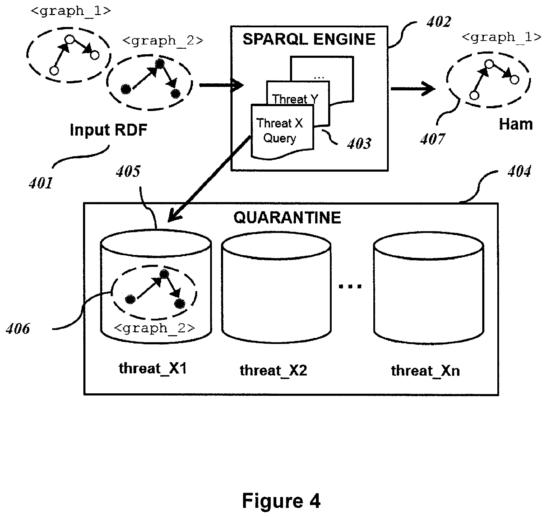

Figure 4 illustrates how SPARQL queries 403 (206 in Figure 2) quarantine suspicious triples. Each anti-spam SPARQL query 403 in SPARQL engine 402 (204 in Figure 2) inserts suspicious triples from input RDF 401 in a given threat-specific store 405 (210 in Figure 2) of quarantine 404 (211 in Figure 2). If a triple is found in a given threat-specific store "X", it means that such triple meets the characteristics specified by threat "X". The filter preserves all named graphs 406 in the input triples 401, e.g. <graph_1>, <graph_2>. This helps users identify the source of spam. Also, this is crucial to restoring possible false positives in their original location.

The custom SPARQL FILTER functions 207 used by the threat-specific SPARQL queries 206 may comprise off-the-shelf, supervised binary classifiers. The list of custom binary classifiers is extensible, as described later.

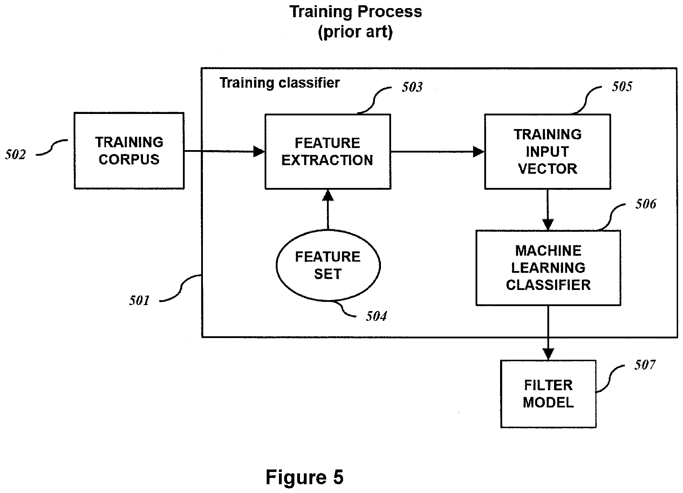

For the sake of completeness, we will now describe a prior art process of training a supervised binary classifier. Figure 5 shows that a list of manually selected features 504 are extracted (feature extraction 503) from a training set 502, to create a training input vector 505. This vector 505 is used to train a machine learning classifier 506, in order to obtain a classifier model 507 that will be used to label records as spam or ham.

The string spam filter 208 may be an off-the-shelf linear support vector machine (SVM) binary classifier, which has been trained to label suspicious string literals as spam. The classifier may be trained on string literals by adopting a "bag-of-words" approach (i.e. each string literal is transformed into a vector of word occurrences, and these word occurrences are the features on which the classifier model has been trained). The adopted bag-of-words approach uses unigrams (i.e. space-separated words). It is preferable not to exclude English "stop words" (i.e. features which include the occurrences of common unigrams like "and", "or", "the", etc.), since taking stop words into account is important in spam classification of short text strings (on average, string literals to be processed by the Linked Data spam filter 203 are short, such as the objects of rdfs:label statements). To improve precision and recall, tf-idf (term-frequency inverse document-frequency) term weighting scores may be adopted instead of plain unigrams occurrences.

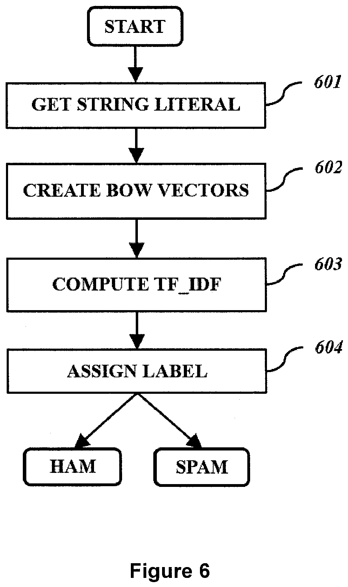

The flowchart in Figure 6 shows how the classifier used as the string spam filter 208 works. In step 601, the classifier receives a string literal from a SPARQL FILTER statement in the SPARQL queries list 606. In step 602 the classifier converts the string literal into a "bag-of-words" (BoW), in step 603 it computes the tf-idf term weighting score for each unigram, and in step 604 it assigns a label to the string literal, either ham (= false) or spam (= true).

### Example 2. The following two triples are processed by the SPARQL engine included in the spam filter. The SPARQL queries include FILTER statements that require the detection of polluted string literals:

```
                     example:Fujitsu rdfs:label "Fujitsu Ltd." .) Ham
                     example:Fujitsu rdfs:label "Buy Cheap Replica Watches" .) Spam
```

### The binary classifier labels the first string literal as ham, whereas the second is labeled as spam.

The URI spam filter 209, which labels URIs as spam or ham, may be an off-the-shelf Naive Bayes binary classifier. The training set includes manually labeled spam URIs from a spam email dataset. Two categories of features are extracted from each URI, Lexical Features and Syntactical Features:
- **Lexical Features:** these include the bag-of-word representation of a URI. Other features in this group include the URI scheme, the top level domain, the host, the query string, and the port.
- **Syntactical Features:** these include the length of the URI, the count of punctuation characters, count of capitalized letters, digits, letters, etc.

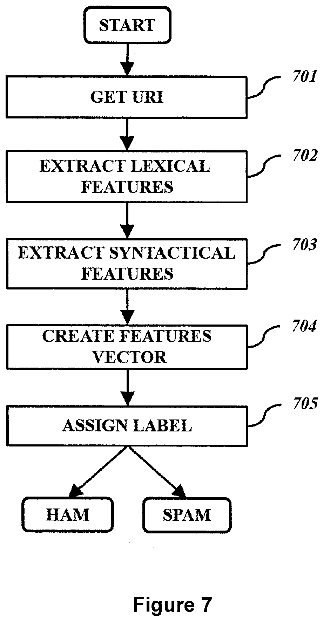

The flowchart in Figure 7 shows how the classifier used as the URI spam filter 209 works. In step 701, the classifier receives a URI from a SPARQL FILTER statement in the SPARQL queries list 206. In step 702 the classifier extracts lexical features, in step 703 it extracts syntactical features, in step 704 it uses the features extracted at steps 702 and 703 to build a feature vector, and in step 705 it assigns a label to the feature vector, either ham (= false) or spam (= true).

### Example 3. The following two triples are processed by the SPARQL engine included in the spam filter. The SPARQL queries include FILTER statements that require a spam check for the following URIs:

```
           Fujitsu owl:sameAs <http://dbpedia.org/resources/fujitsu> . Ham
           Fujitsu owl:sameAs <http://xxx-viagra-cialis.com/buy-cheap-viagra>. Spam
```

*The URI classifier labels the object of the first triple as ham, and the second as spam.*

As previously-mentioned, the SPARQL engine 204 can be any off-the-shelf SPARQL engine compliant with the SPARQL 1.1 specifications. The SPARQL engine 204 is provided with an (extensible) list of SPARQL queries 206 that target a number of spam threats. Such queries 206 will be evaluated on input triples fetched from the web data cache 205. Solutions of such queries are considered malicious triples, and stored into the threat-specific stores 210 in the quarantine 211.

The example below illustrates the anatomy of a SPARQL query for spam detection which identifies the "Malicious Subclassing" threat:

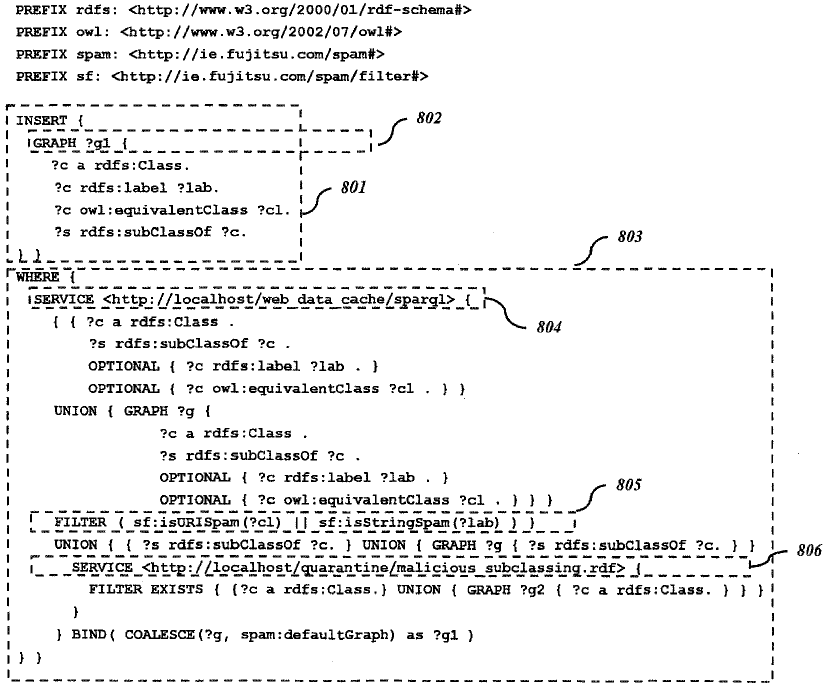

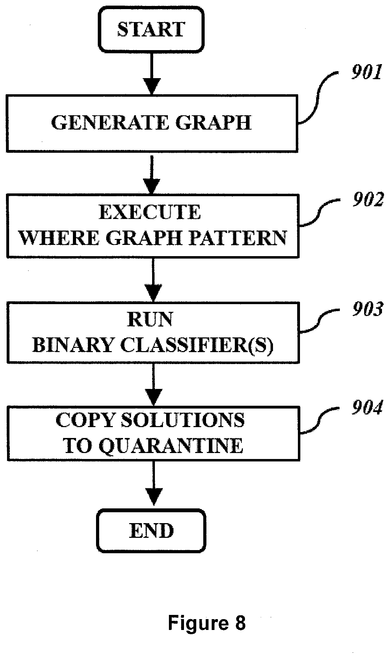

The flowchart of the execution of an anti-spam SPARQL query will now be described with reference to Figure 8. In step 901 the SPARQL engine loads in memory the references to the graph(s) on which the WHERE pattern block 803 will be executed. Block 804 indicates the data source This embodiment uses SPARQL 1.1 Federated Query, hence the SERVICE statement.

In step 902 the WHERE pattern block 803 specifies what the spam triples look like. More precisely, it describes the graph pattern(s) that has(have) to be matched by the SPARQL engine 204 to identify malicious triples. Note that the block matches malicious triples in the default graph and in all named graphs. As shown in block 806, if desired the SPARQL engine 204 can also match part of the query against threat-specific stores 210 in the quarantine 211. This means that this portion of the query will not be executed on the data source specified at block 804, but on one (or more) threat-specific stores 210 in the quarantine 211. This is done with a SPARQL 1.1 Federated Query, hence the SERVICE statement.

In step 903 the binary classifiers are run. Usually the WHERE pattern block 803 needs to identify spam string literals or spam URIs. This is typically required within FILTER statements. As discussed above, in this embodiment the spam filter 203 includes two binary classifiers 208, 209 wrapped as custom FILTER functions, isURISpam() for URIs and isStringSpam() for string literals, as shown in block 805.

In step 904 the INSERT block labelled 801 adds triples identified as spam to the quarantine 211. More specifically, triples are copied to a threat-specific store 210 associated with the query. In the present example, let us assume that the threat-specific store 210 for "Malicious Subclassing" is <http://localhost/quarantine/malicious_subclassing.rdf>. Original named graphs (see block 802) are preserved during the copying. Malicious triples found in the default graph are stored under the spam: defaultGraph graph, as specified by the last line of the query (the COALESCE statement assigns the spam: defaultGraph value to the unbound variable ?g, in the case of the default graph).

Tables 3 and 4 below include sample SPARQL queries, to detect known content-based Linked Data spam threats, that protect against the spam threats such as those shown in Tables 1 and 2. More precisely, Table 3 and Table 4 show how the proposed filtering strategy compares to the approach of possible naive heuristics. Table 3 describes single-triple threats (which can be also filtered by naïve heuristics), whereas Table 4 describes multiple-triples threats, that cannot be filtered with naive heuristics and triple-by-triple binary classifiers. The lists of SPARQL queries are extensible, to support additional spam threats, as described below.

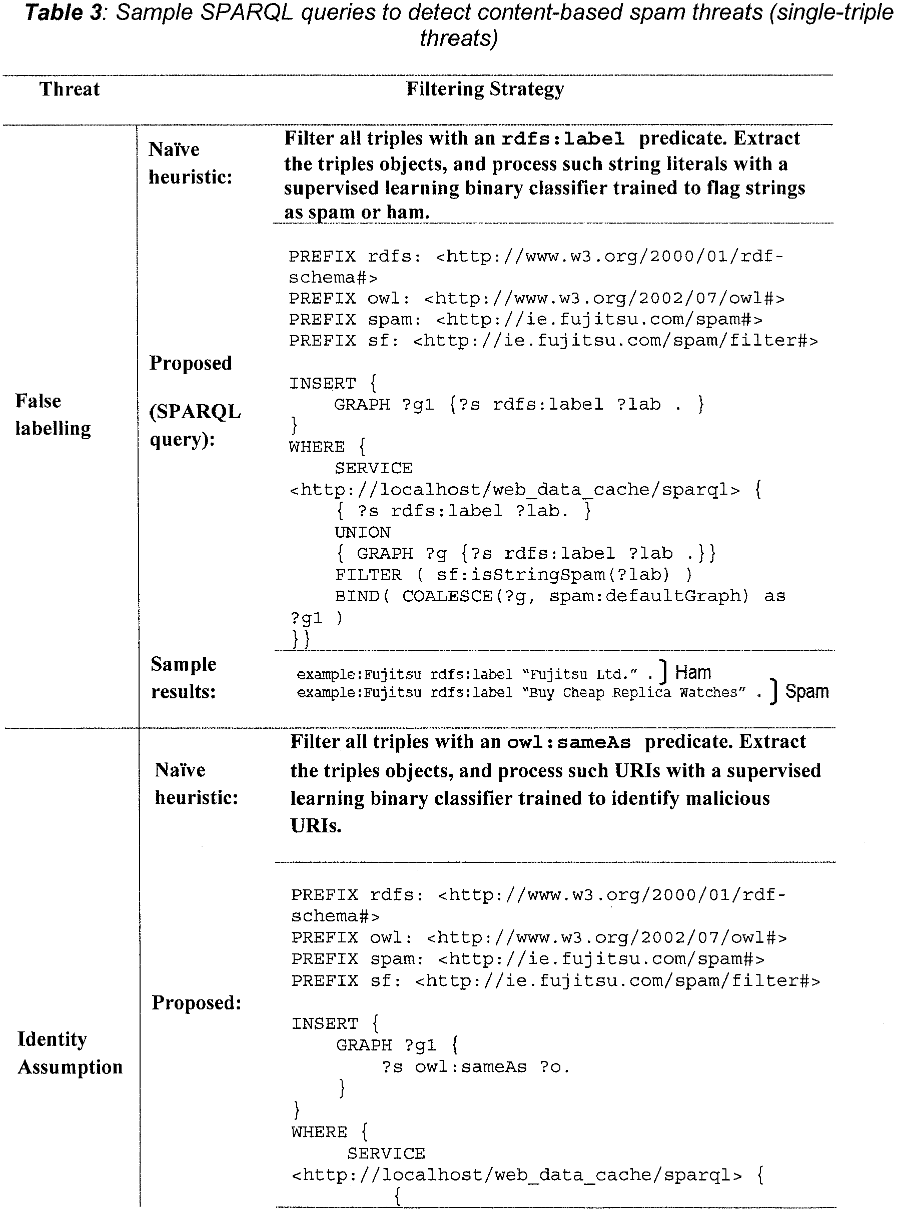

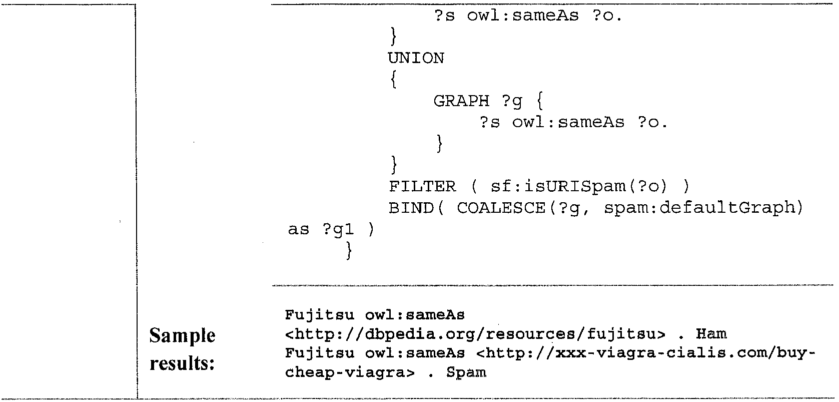

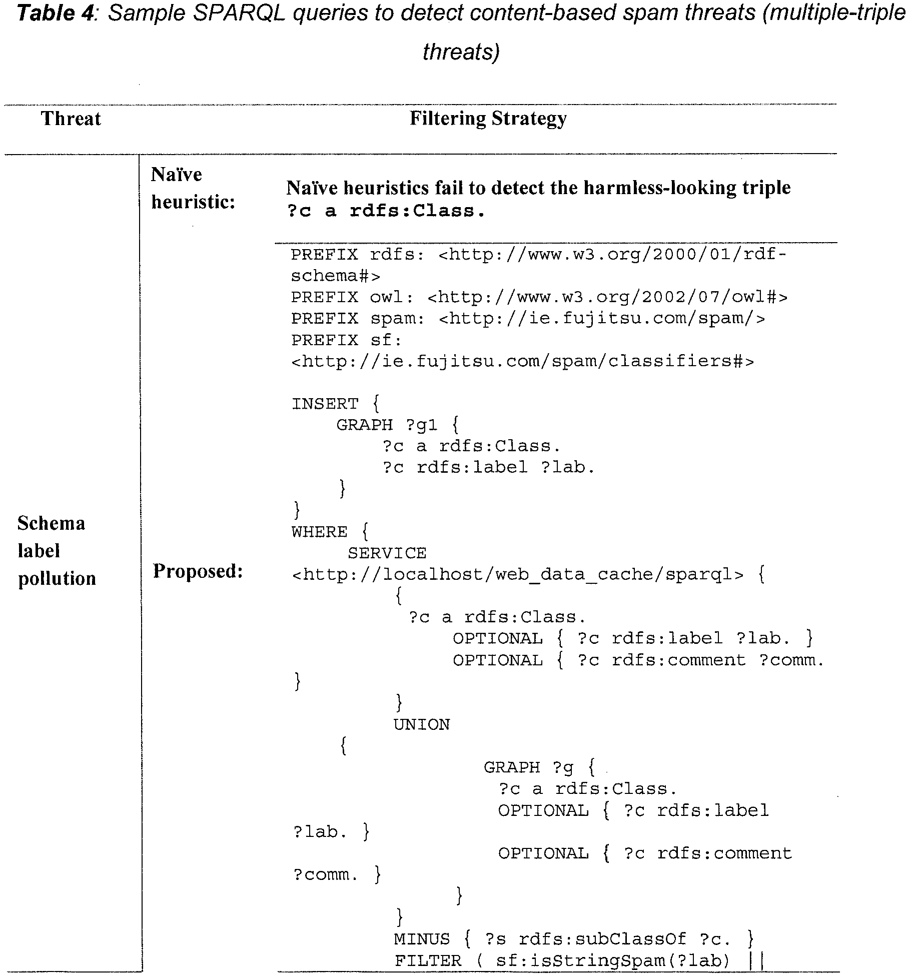

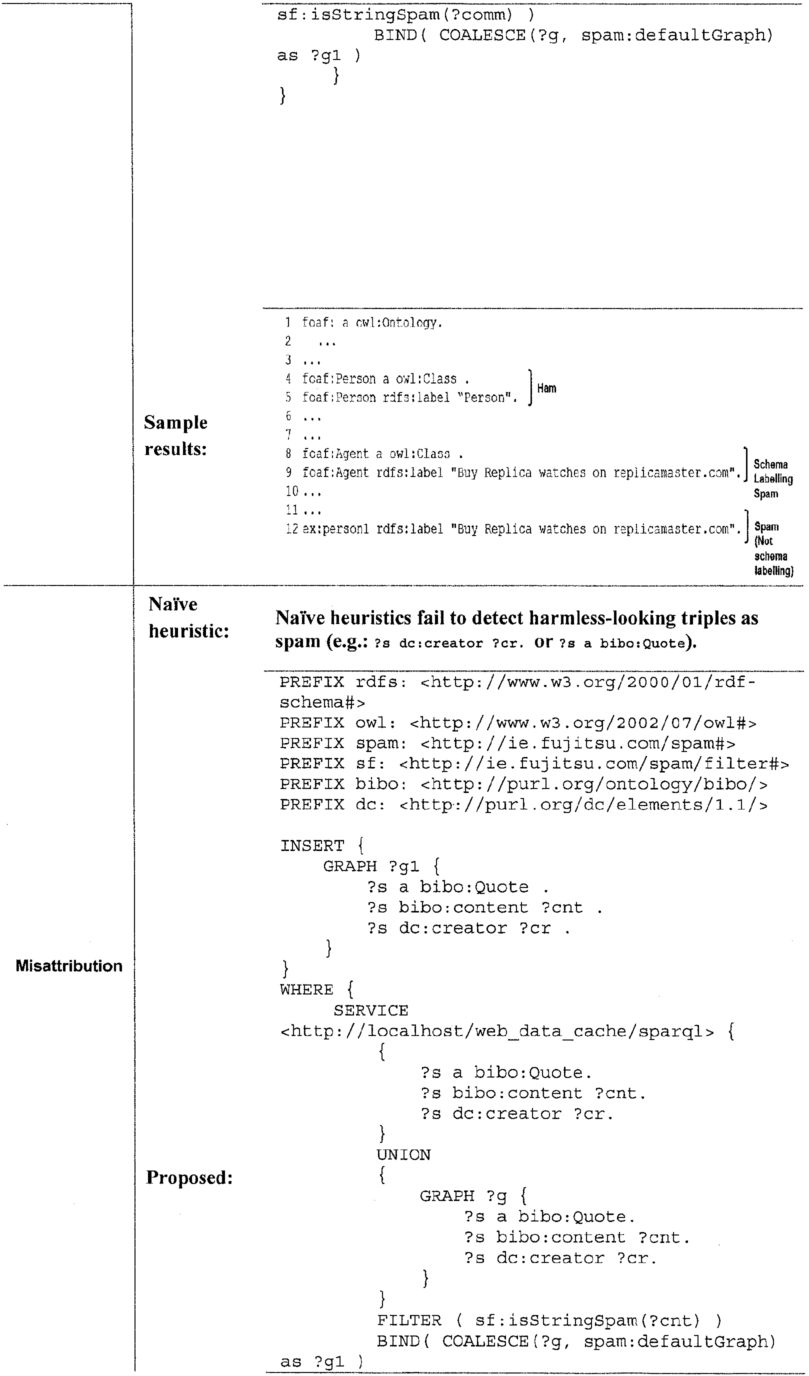

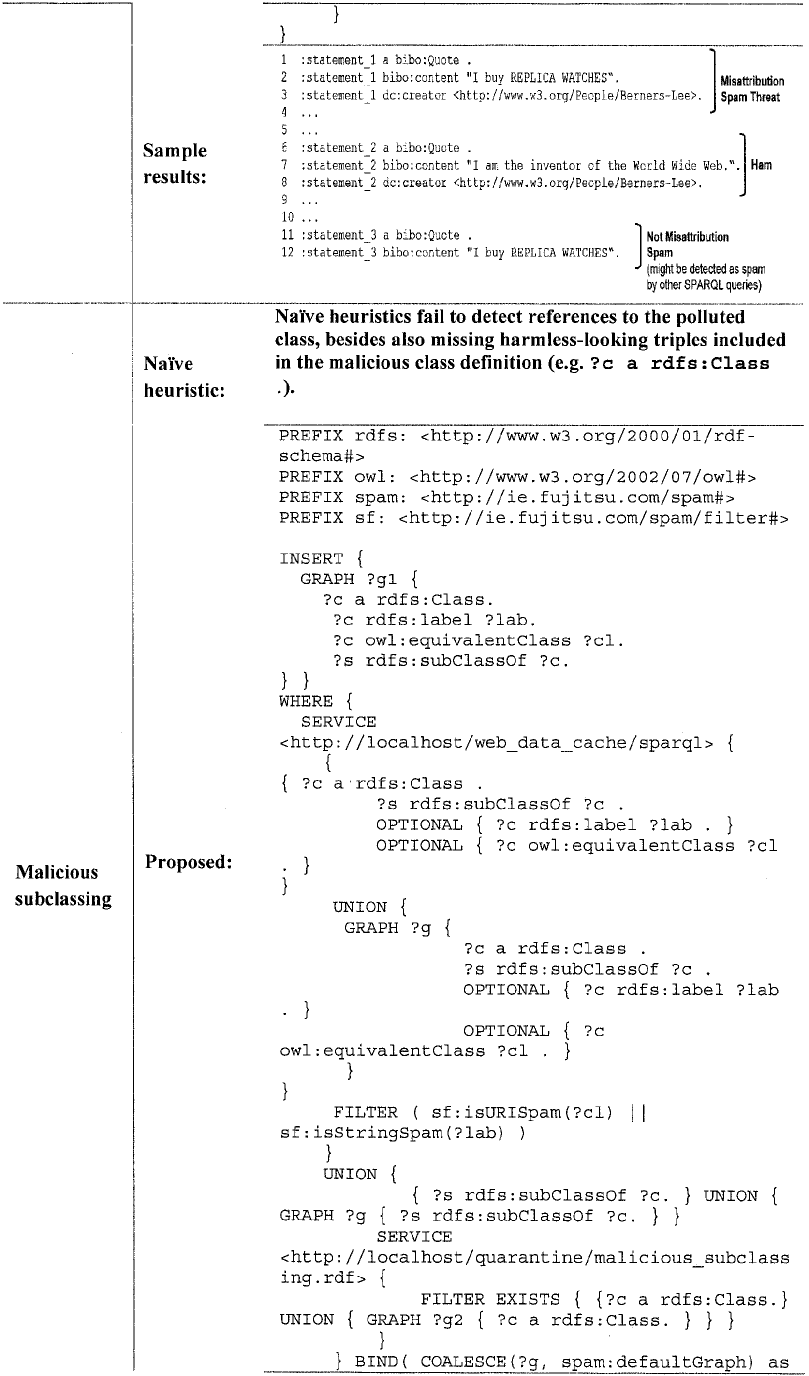

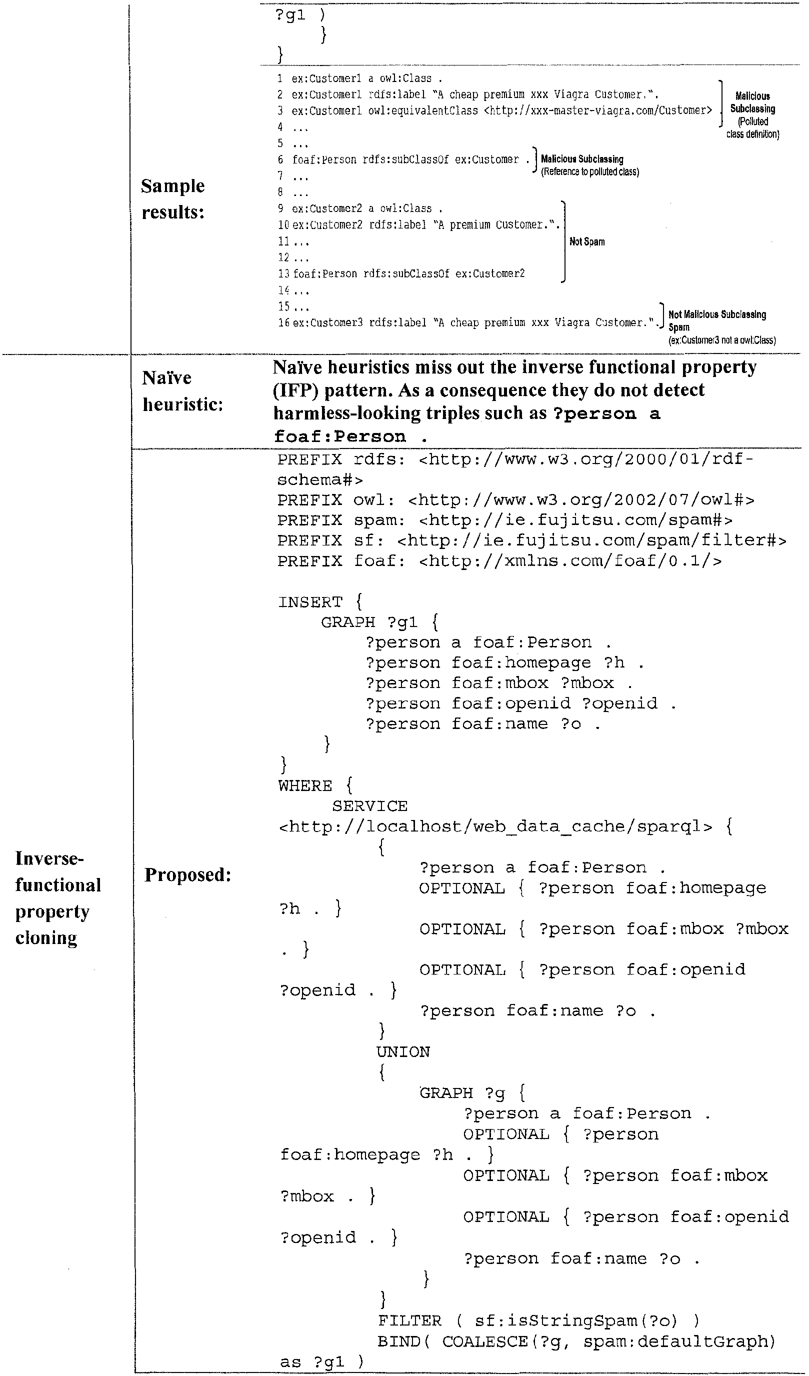

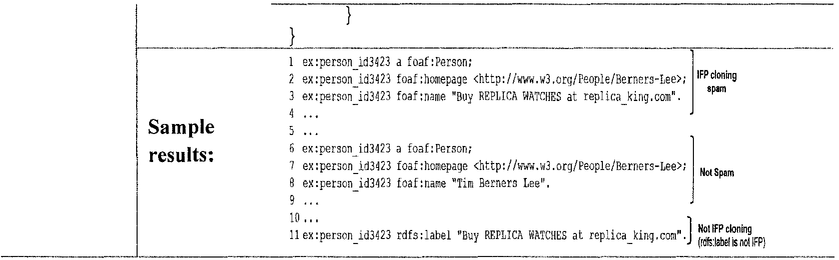

As described above, an embodiment of the present invention uses binary classifiers in the custom SPARQL FILTER functions 207 to detect malicious content in triples, as illustrated in block 1002 shown in the example below. The SPARQL FILTER functions 207 have two default built-in binary classifiers 208 and 209. If the adopted SPARQL engine 204 supports it, such list of classifiers is extensible as follows:
If the SPARQL engine 204 supports custom FILTER functions, the required steps are:
1. Implement and train the classifier (see Figure 5).
2. Wrap the classifier as a FILTER function. Note this step is SPARQL-engine dependent. For example, if the spam filter is based on Jena, FILTER extensions must comply with Jena custom FILTER functions APIs.
3. Dynamically load the new FILTER function at query time. This step is implementation-specific. For example, Jena requires a custom SPARQL prefix defined in the query declaration as shown in block 1001.

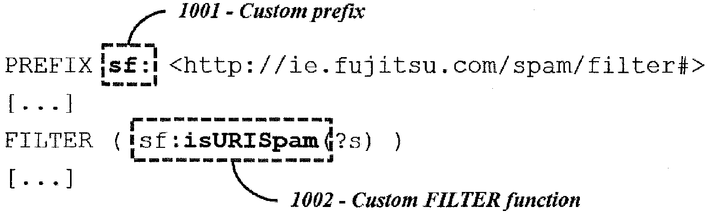

Developers of Linked Data client applications, security professionals, and end users can filter unforeseen spam threats by extending the list of SPARQL queries 206. The required steps to extend the list are:
1. Identify the new threat and the affected graph pattern(s).
2. Write the SPARQL 1.1 INSERT query to identify the malicious pattern(s) and copy suspicious triples to the quarantine 211. The query can be executed only over the data fetched from the web data cache 205, or on the web data cache 205 *and* the quarantine 211 (e.g. when it is required to identify known malicious triples in input data). Note that the SPARQL engine 204 must also be instructed to execute the query against the correct threat-specific store 210 in the quarantine 211.
3. Load the new query in the SPARQL filter.

Such a declarative, SPARQL-based approach enables easy sharing of anti-spam SPARQL queries between end users; for example, queries might be published on a web-based sharing service, and instances of the spam filter might pull updates from the remote sharing service to their local list of SPARQL queries.

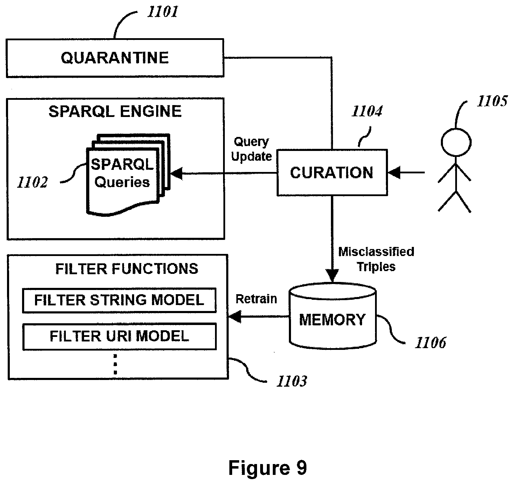

An embodiment of the present invention may support human curation 1104 of the filter results. More specifically, as illustrated in Figure 9, the system can enable: i) the refinement of SPARQL queries 1102 (206 in Figure 2) over time, and ii) the re-training of the custom FILTER functions 1103 (207 in Figure 2). Once the system has filtered a given input, a user 1105 of the filter can access the threat-specific stores (not shown in Figure 9) in quarantine 1101, and remove any misclassified triples (false positives). At this stage, a user 1105 can also edit the anti-spam SPARQL queries 1102. Misclassified triples are then sent to an in-memory store 1106 which will be used to retrain the binary classifiers wrapped as custom FILTER functions 1103.

An embodiment of the present invention provides an apparatus and method for filtering spam triples from input RDF data. The filter supports any Linked Data access strategy, whether this is URI dereferencing (i.e. HTTP operations) or SPARQL queries. Linked Data client applications may be protected from consuming malicious content injected by spammers in the Web of Data, and allows malicious data to be quarantined in a separate repository.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

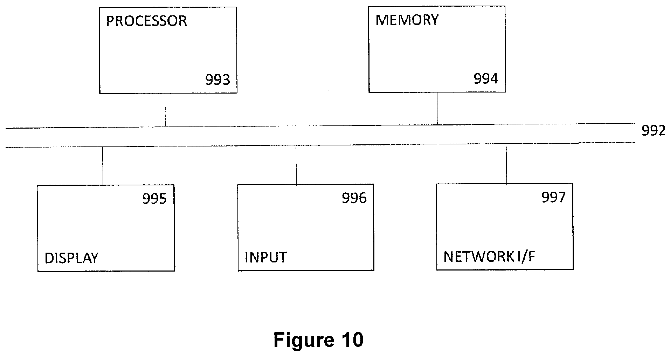

Figure 10 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 10 may be used to implement all the steps of the method illustrated in Figure 3 and perform all the tasks of the Linked Data client application module shown in Figure 2, or only to implement steps 302 to 306 in the method of Figure 2 which are carried out by the Linked Data spam filter, and only to perform the tasks of the Linked Data spam filter 203 in Figure 2.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 3, 6, 7 and/or 8 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 10. Such a computing device need not have every component illustrated in Figure 10, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A method for protecting a computer device running a Linked Data client application (214) from malicious Resource Description Framework - RDF - content in data retrieved by the Linked Data application, by screening RDF triples in data retrieved by the Linked Data client application for malicious RDF content before the RDF triples are further processed by the Linked Data client application, wherein the screening comprises:
storing RDF triples from the retrieved data in a cache (205);
employing a SPARQL Protocol and RDF Query Language - SPARQL - engine equipped with a list of SPARQL queries relating to at least one content-based Linked Data spam threat to analyse each of the RDF triples stored in the cache and identify those of the triples which contain RDF content deemed to be malicious, wherein analysing each of the RDF triples comprises using at least one SPARQL FILTER function (207) comprising a first filter which labels RDF string literals as spam or ham (208) and a second filter which labels Uniform Resource Identifiers - URIs - as spam or ham (209), the first and second filters comprising respective first and second binary classifiers, the first classifier having been trained to identify malicious RDF string literals and the second classifier having been trained to identify malicious URIs;
removing from the cache any triples which have been identified as containing malicious RDF content; and
allowing triples remaining in the cache to be further processed by the Linked Data client application.

2. A method as claimed in claim 1, further comprising quarantining triples which have been identified as containing malicious RDF content.

3. A method as claimed in claim 1 or 2, wherein the SPARQL queries comprise determining whether a graph pattern in an RDF triple matches a stored graph pattern for malicious RDF content.

4. A computer program which, when run on a computer, causes that computer to carry out the method of any one of claims 1 to 3.

5. A filter configured to protect a computer device running a Linked Data client application (214) from malicious Resource Description Framework - RDF - content in data retrieved by the Linked Data application, which filter is operable to screen RDF triples in data retrieved by the Linked Data client application for malicious RDF content before the RDF triples are further processed by the Linked Data client application, wherein the filter comprises:
a cache (206) configured to store RDF triples from the retrieved data;
a SPARQL Protocol and RDF Query Language - SPARQL - engine equipped with a list of SPARQL queries (207) relating to at least one content-based Linked Data spam threat, which engine is configured to analyse each of the RDF triples stored in the cache and identify those of the triples which contain RDF content deemed to be malicious;
at least one SPARQL FILTER function for use by the SPARQL engine in analysing each of the RDF triples, which SPARQL filter function comprises a first filter which labels RDF string literals as spam or ham (208) and a second filter which labels Uniform Resource Identifiers - URIs - as spam or ham (209), wherein the first and second filters comprise respective first and second binary classifiers, the first classifier having been trained to identify malicious RDF string literals and the second classifier having been trained to identify malicious URIs; and
a subtractor configured to remove from the cache any triples which have been identified as containing malicious RDF content before the triples in the cache are further processed by the Linked Data client application.

6. A filter as claimed in claim 5, further comprising an isolated repository for storing copies of triples, which have been identified as containing malicious RDF content, in quarantine.

7. A filter as claimed in claim 5 or 6, wherein the SPARQL queries comprise determining whether a graph pattern in an RDF triple matches a stored graph pattern for malicious RDF content.

## Patentansprüche

1. Verfahren zum Schutz einer Computervorrichtung, auf der eine "Linked Data"-Clientanwendung (214) läuft, gegen bösartigen RDF (Resource Description Framework, Ressourcenbeschreibungssystem) -Inhalt in Daten, die von der "Linked Data"-Anwendung abgerufen werden, durch Überprüfen von RDF-Tripletts in den von der "Linked Data"-Clientanwendung abgerufenen Daten auf bösartigen RDF-Inhalt, bevor die RDF-Tripletts von der "Linked Data"-Clientanwendung weiterverarbeitet werden, wobei das Überprüfen umfasst:
Speichern der RDF-Tripletts aus den abgerufenen Daten in einem Cache (205);
Verwenden einer SPARQL (SPARQL Protocol and RDF Query Language, SPARQL-Protokoll- und RDF-Abfragesprache) -Engine, die mit einer Liste von SPARQL-Abfragen ausgestattet ist, die sich auf wenigstens eine inhaltbasierte "Linked Data"-Spambedrohung bezieht, zum Analysieren jedes der im Cache gespeicherten RDF-Tripletts und Identifizieren derjenigen Tripletts, die als bösartig eingeschätzten RDF-Inhalt enthalten, wobei das Analysieren jedes der RDF-Tripletts umfasst, wenigstens eine SPARQL-FILTER-Funktion (207) zu verwenden, die wenigstens ein erstes Filter, das RDF-Zeichenketten als unerwünscht oder erwünscht kennzeichnet (208), umfasst, und ein zweites Filter, das URIs (Uniform Resource Identifiers, einheitliche Ressourcenkennung) als unerwünscht oder erwünscht (209) kennzeichnet, wobei das erste und das zweite Filter einen ersten bzw. einen zweiten binären Klassifikator umfassen, wobei der erste Klassifikator darauf trainiert wurde, bösartige RDF-Zeichenketten zu identifizieren, und der zweite Klassifikator darauf trainiert wurde, bösartige URIs zu identifizieren;
Entfernen von Tripletts, die als bösartigen RDF-Inhalt enthaltend identifiziert wurden, aus dem Cache; und
Zulassen, dass im Cache verbliebene Tripletts von der "Linked Data"-Clientanwendung weiterverarbeitet werden.

2. Verfahren nach Anspruch 1, ferner umfassend, die Tripletts, die als bösartigen RDF-Inhalt enthaltend identifiziert wurden, in Quarantäne zu speichern.

3. Verfahren nach Anspruch 1 oder 2, wobei die SPARQL-Abfragen umfassen zu bestimmen, ob ein Graphenmuster in einem RDF-Triplett einem gespeicherten Graphenmuster für bösartigen RDF-Inhalt entspricht.

4. Computerprogramm, das bei Ausführung auf einem Computer bewirkt, dass der Computer das Verfahren nach einem der Ansprüche 1 bis 3 ausführt.

5. Filter, das ausgelegt ist zum Schutz einer Computervorrichtung, auf der eine "Linked Data"-Clientanwendung (214) läuft, gegen bösartigen RDF (Resource Description Framework, Ressourcenbeschreibungssystem) -Inhalt in Daten, die von der "Linked Data"-Anwendung abgerufen werden, wobei das Filter betreibbar ist zum Überprüfen von RDF-Tripletts in den von der "Linked Data"-Clientanwendung abgerufenen Daten auf bösartigen RDF-Inhalt, bevor die RDF-Tripletts von der "Linked Data"-Clientanwendung weiterverarbeitet werden, wobei das Filter umfasst:
einen Cache (206), der ausgelegt ist zum Speichern der RDF-Tripletts aus den abgerufenen Daten;
eine SPARQL (SPARQL Protocol and RDF Query Language, SPARQL-Protokoll- und RDF-Abfragesprache) -Engine, die mit einer Liste von SPARQL-Abfragen (207) ausgestattet ist, die sich auf wenigstens eine inhaltbasierte "Linked Data"-Spambedrohung bezieht, wobei die Engine ausgelegt ist zum Analysieren jedes der im Cache gespeicherten RDF-Tripletts und Identifizieren derjenigen Tripletts, die als bösartig eingeschätzten RDF-Inhalt enthalten;
wenigstens eine SPARQL-FILTER-Funktion zur Verwendung durch die SPARQL-Engine bei der Analyse jedes der RDF-Tripletts, wobei die SPARQL-FILTER-Funktion wenigstens ein erstes Filter, das RDF-Zeichenketten als unerwünscht oder erwünscht kennzeichnet (208), und ein zweites Filter, das URIs (Uniform Resource Identifiers, einheitliche Ressourcenkennung) als unerwünscht oder erwünscht (209) kennzeichnet, umfasst, wobei das erste und das zweite Filter einen ersten bzw. einen zweiten binären Klassifikator umfassen, wobei der erste Klassifikator darauf trainiert wurde, bösartige RDF-Zeichenketten zu identifizieren, und der zweite Klassifikator darauf trainiert wurde, bösartige URIs zu identifizieren; und
einen Subtrahierer, der ausgelegt ist zum Entfernen von Tripletts, die als bösartigen RDF-Inhalt enthaltend identifiziert wurden, aus dem Cache, bevor die Tripletts im Cache von der "Linked Data"-Clientanwendung weiterverarbeitet werden.

6. Filter nach Anspruch 5, ferner einen isolierten Datenspeicher umfassend, um Kopien von Tripletts, die als bösartigen RDF-Inhalt enthaltend identifiziert wurden, in Quarantäne zu speichern.

7. Filter nach Anspruch 5 oder 6, wobei die SPARQL-Abfragen umfassen zu bestimmen, ob ein Graphenmuster in einem RDF-Triplett einem gespeicherten Graphenmuster für bösartigen RDF-Inhalt entspricht.

## Revendications

1. Procédé de protection d'un dispositif informatique exécutant une application client en données liées (214) contre un contenu malveillant de cadre de description de ressources -RDF- dans des données récupérées par l'application en données liées, en criblant des triplets RDF dans des données récupérées par l'application client en données liées pour un contenu RDF malveillant avant que les triplets RDF soient traitées ultérieurement par l'application client en données liées, dans lequel le criblage comprend les étapes consistant à :
stocker des triplets RDF provenant des données extraites dans une mémoire cache (205) ;
utilisant un moteur à protocole SPARQL et langage de requête RDF -SPARQL- équipé d'une liste de requêtes SPARQL relatives à au moins une menace de courrier indésirable en données liées sur la base d'un contenu, afin d'analyser chacun des triplets RDF stockés dans la mémoire cache et d'identifier ceux des triplets qui contiennent du contenu RDF considéré comme malveillant, dans lequel l'analyse de chacun des triplets RDF comprend l'utilisation d'au moins une fonction SPARQL FILTER (207) comprenant un premier filtre qui étiquette des littéraux de chaîne RDF en tant que courrier indésirable ou courrier légitime (208), et un second filtre qui identifie des identificateurs de ressources uniformes - URI- en tant que courrier indésirable ou courrier légitime (209), les premier et seconds filtres comprenant des premiers et seconds classificateurs binaires respectifs, le premier classificateur ayant été formé à l'identification de littéraux de chaîne RDF malveillants et le second classificateur ayant été formé à l'identification d'URI malveillants ;
retirer de la mémoire cache tous les triplets identifiés comme contenant du contenu RDF malveillant ; et
permettre aux triplets restants dans la mémoire cache d'être traités ultérieurement par l'application client en données liées.

2. Procédé selon la revendication 1, comprenant en outre la mise en quarantaine de triplets qui ont été identifiés comme contenant un contenu RDF malveillant.

3. Procédé selon la revendication 1 ou 2, dans lequel les requêtes SPARQL consistent à déterminer si un motif graphique dans un triplet RDF correspond à un motif graphique stocké pour un contenu RDF malveillant.

4. Programme d'ordinateur qui, lorsqu'il est exécuté sur un ordinateur, amène cet ordinateur à mettre en oeuvre le procédé selon l'une quelconque des revendications 1 à 3.

5. Filtre configuré pour protéger un dispositif informatique exécutant une application client en données liées (214) contre un contenu malveillant de cadre de description de ressources -RDF- dans des données récupérées par l'application en données liées, lequel filtre étant opérationnel pour cribler des les triplets RDF dans des données récupérées par l'application client en données liées pour un contenu RDF malveillant avant que les triplets RDF soient ensuite traités par l'application client en données liées, dans lequel le filtre comprend :
une mémoire cache (206) configurée pour stocker des triples RDF provenant des données extraites ;
un moteur à protocole SPARQL et langage de requête RDF -SPARQL- équipé d'une liste de requêtes SPARQL relatives à au moins une menace de courrier indésirable en données liées sur la base d'un contenu, lequel moteur est configuré pour analyser chacun des triplets RDF stockés dans la mémoire cache et d'identifier ceux des triplets qui contiennent le contenu RDF considéré comme malveillant, ce moteur étant configuré pour analyser chacun des triplets RDF stockés dans la mémoire cache et identifier ceux des triplets qui contiennent du contenu RDF considéré comme malveillant ;
au moins une fonction SPARQL FILTER à utiliser par le moteur SPARQL pour analyser chacun des triplets RDF, laquelle fonction de SPARQL FILTER comprend un premier filtre étiquetant des littéraux de chaîne RDF en tant que courrier indésirable ou courrier légitime (208) et un second filtre étiquetant des identificateurs de ressources uniformes -URI-en tant que courrier indésirable ou courrier légitime (209), dans lesquels les premier et second filtres comprennent des premier et second classificateurs binaires respectifs, le premier classificateur ayant été formé à l'identification de littéraux de chaîne RDF malveillants et le second classificateur ayant été formé à l'identification d'URI malveillants ; et
un soustracteur configuré pour supprimer de la mémoire cache tous les triplets identifiés comme contenant du contenu RDF malveillant avant que les triplets de la mémoire cache ne soient traités ultérieurement par l'application cliente en données liées.

6. Filtre selon la revendication 5, comprenant en outre un référentiel isolé pour stocker des copies de triplets, qui ont été identifiés comme contenant un contenu RDF malveillant, en quarantaine.

7. Filtre selon la revendication 5 ou 6, dans lequel les requêtes SPARQL consistent à déterminer si un motif graphique dans un triplet RDF correspond à un motif graphique stocké pour un contenu RDF malveillant.
